(19)

Europäisches
Patentamt

European
Patent Office

Office européen
des brevets

(11) **EP 4 704 013 A1**

(12) **EUROPEAN PATENT APPLICATION**

(43) Date of publication:
**04.03.2026 Bulletin 2026/10**

(21) Application number: **25184368.6**

(22) Date of filing: **23.06.2025**

(51) International Patent Classification (IPC):
**G06Q 30/0201** (2023.01)    **G06Q 30/0283** (2023.01)

(52) Cooperative Patent Classification (CPC):
**G06Q 30/0206; G06Q 30/0283**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.09.2024 IN 202421066667**

(71) Applicant: **Tata Consultancy Services Limited Maharashtra (IN)**

(72) Inventors:
 • **BHOOKYA, UDAY CHANDRA**
  **411006 Pune (IN)**
 • **JETHURI, KUNAL**
  **411006 Pune (IN)**
 • **NATU, MAITREYA**
  **411006 Pune (IN)**
 • **RAVURU, SANJEEVA RAYUDU**
  **411006 Pune (IN)**

(74) Representative: **Goddar, Heinz J.**
 **Boehmert & Boehmert**
 **Anwaltspartnerschaft mbB**
 **Pettenkoferstrasse 22**
 **80336 München (DE)**

(54) **METHOD AND SYSTEM TO OPTIMIZE CLOUD COST BY ANALYZING PRICING MODELS**

(57)    Existing tools provide statistical analysis but often lack comprehensive insights into where costs are accruing and how they can be optimized. The present method obtains optimal band by sorting set of datapoints in ascending order. Sliding window approach is applied on sorted set of datapoints for selected window size, wherein lower band and upper band is created. Minimum width is created by finding difference between lower band and upper band. New lower band and new upper band are obtained, and width is computed by finding difference between new lower band and new upper band. Width and minimum width are compared, and width is saved as optimal band. Total outlier factor is calculated to determine set of datapoints outside optimal band and to assess proximity of set of datapoints to optimal band. One or more recommendations for optimizing cloud cost are generated based on obtained optimal band and total outlier factor.

INPUT MODULE 202 → OPTIMAL BAND IDENTIFICATION MODULE 204 → TOTAL OUTLIER FACTOR CALCULATION MODULE 206 → CLOUD COST OPTIMIZATION RECOMMENDATION MODULE 208

**FIG. 2**

**Description**

CROSS-REFERENCE TO RELATED APPLICATIONS AND PRIORITY

The present application claims priority from Indian provisional application no. 202421066667, filed on September 03, 2024.

TECHNICAL FIELD

The disclosure herein generally relates to cloud spend optimization, and, more particularly, to a method and system to optimize cloud cost by analyzing pricing models.

BACKGROUND

Cloud technologies are shaping the industries of today and the future. More and more businesses are attracted to cloud due to its promise of security, affordability, and ease of use. In 2023, total expenditure on public cloud system amounted to a total of $563.6 billion in 2023. This number is expected to go up to $678.8 billion in 2024, a 20.4% growth. It is predicted that by 2027, more than 70% of enterprises will use industry cloud platforms to accelerate their business initiatives, up from less than 15% in 2023.

Cloud service providers offer different pricing models to use resources. These pricing models are based on the duration of usage, the nature of usage, the maximum limit on usage, etc. and consequently leading to different costs. One specific variation in the pricing model is offered in the form of On-demand versus reserve instance pricing. With On-demand pricing, a user pays only for what the user use with no long-term commitment. Reserve instance (RI), on the other hand, offers a discounted rate but expects a fixed duration commitment. A cloud user is expected to be aware of its resource requirements to select the appropriate pricing model based for its resources.

Some of the existing tools provide statistical analysis and dashboards but often lack comprehensive insights into where costs are accruing and how they can be optimized. Further some of the existing sophisticated tools that detect abnormal spending typically analyze resources in isolation, failing to account for their systemic impact. This leads to either an overload of anomalies or a lack of meaningful insights for prioritization and budget planning. Most existing solutions primarily focus on identifying spend leakages without providing actionable recommendations to address these issues effectively.

SUMMARY

Embodiments of the present disclosure present technological improvements as solutions to one or more of the above-mentioned technical problems recognized by the inventors in conventional systems. For example, in one embodiment, a method to optimize cloud cost by analyzing pricing models is provided. The method includes obtaining, via one or more hardware processors, an optimal band from utilization of one or more metrics specific to one or more set of resources using a sliding window approach by: sorting a set of datapoints $U$ corresponding to a timeseries $U(t)$ over $T$ timesteps, in an ascending order; selecting one or more datapoints $(n)$ from the sorted set of datapoints that covers a pre-defined percentage of the set of datapoints $U$, as a window size; and applying the sliding window approach on the sorted set of datapoints $U$ for the selected window size for obtaining the optimal band by: creating an initial band with the selected the one or more datapoints $(n)$, wherein a first datapoint in the selected the one or more datapoints $(n)$ is considered as a lower bound of the initial band $U_{Lower}$ and a $n^{th}$ datapoint in the selected one or more datapoints $(n)$ is considered as a upper bound of the initial band $U_{Upper}$; calculating a first width of the created initial band as a minimum width $W_{min}$ by finding a difference between the upper bound of the initial band $U_{Upper}$ and the lower bound of the initial band $U_{Lower}$ as $U_{Upper} - U_{Lower}$; and iteratively performing until a penultimate datapoint from the set of datapoints $U$ is indexed by: obtaining a new lower bound of the initial band $U_{NewLower}$ and a corresponding new upper bound of the initial band $U_{NewUpper}$ by adding $(n)$ to a starting point index, for each new starting point comprised in the lower bound of the initial band $U_{Lower}$; computing a second width $W$ by finding a difference between the associated new upper bound of the initial band $U_{NewUpper}$ and the new lower bound of the initial band $U_{NewLower}$ as $U_{NewUpper} - U_{NewLower}$; comparing the second width $W$ and the minimum width $W_{min}$; updating the minimum width $W_{min}$ based on the comparison and saving the second width $W$ as the optimal band; and selecting an interval $[U_{Upper}, U_{Lower}]$ that has minimum width $W_{min}$, $U_{Upper} - U_{Lower}$; calculating, via the one or more hardware processors, a total outlier factor to determine the set of datapoints $U$ outside the optimal band and assessing a proximity of the set of datapoints $U$ to the optimal band, using a Root mean square deviation (RMSD) technique by: calculating a lower band penalty for each datapoint comprised in the set of datapoints $U$ below the lower bound of the optimal band by determining a Root mean square deviation of the set of datapoints $U$ with respect to the lower bound of the initial band; calculating an upper band penalty for each datapoint set of datapoints $U$ above the upper bound of the optimal by determining the Root mean square deviation of the set of datapoints $U$ with respect to the upper bound of the band; and calculating the total outlier factor based on the lower band penalty and the upper band penalty; and generating, via the one or more hardware processors, one or more recommendations for optimizing a cloud cost based on the obtained optimal band and the total outlier factor comprising: providing the one or more set of resources for a long-term reserve instance (RI) pricing model, if the width of the optimal band is less than a first pre-defined threshold; providing the one or more set of resources for the long-term reserve instance (RI) pricing model, if the total outlier factor is less than a second pre-defined threshold; and providing the one or more set of resources for a short-term reserve instance (RI) pricing model, if the total outlier factor is greater than a third pre-defined threshold.

In another aspect, there is provided a system to optimize cloud cost by analyzing pricing models. The system comprises: a memory storing instructions; one or more communication interfaces; and one or more hardware processors coupled to the memory via the one or more communication interfaces, wherein the one or more hardware processors are configured by the instructions to: obtain an optimal band from utilization of one or more metrics specific to one or more set of resources using a sliding window approach by: sorting a set of datapoints $U$ corresponding to a timeseries $U(t)$ over $T$ timesteps, in an ascending order; selecting one or more datapoints ($n$) from the sorted set of datapoints that covers a pre-defined percentage of the set of datapoints $U$, as a window size; and applying the sliding window approach on the sorted set of datapoints $U$ for the selected window size for obtaining the optimal band by: creating an initial band with the selected the one or more datapoints ($n$), wherein a first datapoint in the selected the one or more datapoints ($n$) is considered as a lower bound of the initial band $U_{Lower}$ and a $n^{th}$ datapoint in the selected one or more datapoints ($n$) is considered as a upper bound of the initial band $U_{Upper}$; calculating a first width of the created initial band as a minimum width $W_{min}$ by finding a difference between the upper bound of the initial band $U_{Upper}$ and the lower bound of the initial band $U_{Lower}$ as $U_{Upper}$ - $U_{Lower}$; and iteratively performing until a penultimate datapoint from the set of datapoints $U$ is indexed by: obtaining a new lower bound of the initial band $U_{NewLower}$ and a corresponding new upper bound of the initial band $U_{NewUpper}$ by adding ($n$) to a starting point index, for each new starting point comprised in the lower bound of the initial band $U_{Lower}$; computing a second width $W$ by finding a difference between the associated new upper bound of the initial band $U_{NewUpper}$ and the new lower bound of the initial band $U_{NewLower}$ as $U_{NewUpper}$ - $U_{NewLower}$; comparing the second width $W$ and the minimum width $W_{min}$; updating the minimum width $W_{min}$ based on the comparison and saving the second width $W$ as the optimal band; and selecting an interval [$U_{Upper}$, $U_{Lower}$] that has minimum width $W_{min}$, $U_{Upper}$ - $U_{Lower}$ The system further includes calculating a total outlier factor to determine the set of datapoints $U$ outside the optimal band and assessing a proximity of the set of datapoints $U$ to the optimal band, using a Root mean square deviation (RMSD) technique by: calculating a lower band penalty for each datapoint comprised in the set of datapoints $U$ below the lower bound of the optimal band by determining a Root mean square deviation of the set of datapoints $U$ with respect to the lower bound of the initial band; calculating an upper band penalty for each datapoint set of datapoints $U$ above the upper bound of the optimal by determining the Root mean square deviation of the set of datapoints $U$ with respect to the upper bound of the band; and calculating the total outlier factor based on the lower band penalty and the upper band penalty; and generating, via the one or more hardware processors, one or more recommendations for optimizing a cloud cost based on the obtained optimal band and the total outlier factor comprising: providing the one or more set of resources for a long-term reserve instance (RI) pricing model, if the width of the optimal band is less than a first pre-defined threshold; providing the one or more set of resources for the long-term reserve instance (RI) pricing model, if the total outlier factor is less than a second pre-defined threshold; and providing the one or more set of resources for a short-term reserve instance (RI) pricing model, if the total outlier factor is greater than a third pre-defined threshold.

In yet another aspect, there are provided one or more non-transitory machine-readable information storage mediums comprising one or more instructions which when executed by one or more hardware processors cause obtaining an optimal band from utilization of one or more metrics specific to one or more set of resources using a sliding window approach by: sorting a set of datapoints $U$ corresponding to a timeseries $U(t)$ over $T$ timesteps, in an ascending order; selecting one or more datapoints ($n$) from the sorted set of datapoints that covers a pre-defined percentage of the set of datapoints $U$, as a window size; and applying the sliding window approach on the sorted set of datapoints $U$ for the selected window size for obtaining the optimal band by: creating an initial band with the selected the one or more datapoints ($n$), wherein a first datapoint in the selected the one or more datapoints ($n$) is considered as a lower bound of the initial band $U_{Lower}$ and a $n^{th}$ datapoint in the selected one or more datapoints ($n$) is considered as a upper bound of the initial band $U_{Upper}$; calculating a first width of the created initial band as a minimum width $W_{min}$ by finding a difference between the upper bound of the initial band $U_{Upper}$ and the lower bound of the initial band $U_{Lower}$ as $U_{Upper}$ - $U_{Lower}$; and iteratively performing until a penultimate datapoint from the set of datapoints $U$ is indexed by: obtaining a new lower bound of the initial band $U_{NewLower}$ and a corresponding new upper bound of the initial band $U_{NewUpper}$ by adding ($n$) to a starting point index, for each new starting point comprised in the lower bound of the initial band $U_{Lower}$; computing a second width $W$ by finding a difference between the associated new upper bound of the initial band $U_{NewUpper}$ and the new lower bound of the initial band $U_{NewLower}$ as $U_{NewUpper}$ - $U_{NewLower}$; comparing the second width $W$ and the minimum width $W_{min}$; updating the minimum width $W_{min}$ based on the comparison and saving the second width $W$ as the optimal band; and selecting an interval [$U_{Upper}$, $U_{Lower}$] that has minimum width $W_{min}$, $U_{Upper}$ - $U_{Lower}$; calculating a total outlier factor to determine the set of datapoints $U$ outside the optimal band and assessing a proximity of the set of datapoints $U$ to the optimal band, using a Root mean square deviation (RMSD) technique by: calculating a lower band penalty for each datapoint comprised in the set of datapoints $U$ below the lower bound of the optimal band by determining a Root mean square deviation of the set of datapoints $U$ with respect to the lower bound of the initial band; calculating an upper band penalty for each datapoint set of datapoints $U$ above the upper bound of the optimal by determining the Root mean square deviation of the set of datapoints $U$ with respect to the upper bound of the band; and calculating the total outlier factor based on the lower band penalty and the upper band penalty; and generating, via the one or more hardware processors, one or more recommendations for optimizing a cloud cost based on the obtained optimal band and the total outlier factor comprising: providing the one or more set of resources for a long-term reserve instance (RI) pricing model, if the width of the optimal band is less than a first pre-defined threshold; providing the one or more set of resources for the long-term reserve instance (RI) pricing model, if the total outlier factor is less than a second pre-defined threshold; and providing the one or more set of resources for a short-term reserve instance (RI) pricing model, if the total outlier factor is greater than a third pre-defined threshold.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary title system to optimize cloud cost by analyzing pricing models, according to some embodiments of the present disclosure.

FIG. 2 is a functional block diagram of the system to optimize cloud cost by analyzing pricing models, according to some embodiments of the present disclosure.

FIGS. 3A through 3C are flow diagrams illustrating the steps involved in the method to optimize cloud cost by analyzing pricing models, according to some embodiments of the present disclosure.

FIGS. 4A and 4B show a Central Processing Unit (CPU) utilization of a metric and resource utilization bands, according to some embodiments of the present disclosure.

FIGS. 5A and 5B shows that a Virtual Machine (VM) demonstrates a consistent utilization across a Central Processing Unit (CPU) and a memory, making it an ideal case for a Reserve instance (RI), according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The spend leakage in a cloud estate manifests in many forms and requires a careful analysis of various metrics. To overcome the challenges of the conventional approaches in solving the problem of cloud spend optimization, embodiments herein provide a method and system to optimize cloud cost by analyzing pricing models. In the present disclosure a set of datapoints $U$ corresponding to a timeseries $U(t)$ over $T$ timesteps is sorted in an ascending order. Further a sliding window approach is applied on the sorted set of datapoints $U$ for a selected window size, wherein a lower band and an upper band is created. A minimum width $W_{min}$ is created by finding a difference between the lower band and the upper band. A new lower band and a new upper band were obtained. Further a width $W$ is obtained by finding the difference between the new lower band and the new upper band. Furthermore, the width $W$ and the minimum width $W_{min}$ are compared, wherein the minimum width $W_{min}$ is updated based on the comparison and the width $W$ is saved as an optimal band. A total outlier factor is calculated to determine the set of datapoints $U$ outside the optimal band and assessing a proximity of the set of datapoints $U$ to the optimal band using a Root mean square deviation (RMSD) technique. Finally, one or more recommendations for optimizing the cloud cost are generated based on the obtained optimal band and the total outlier factor.

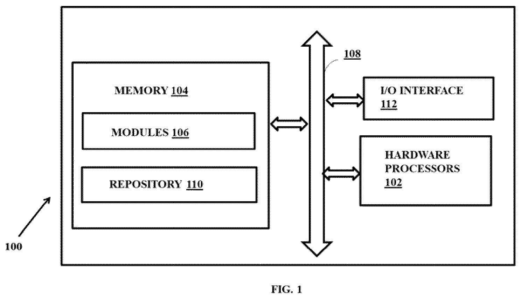

Referring now to the drawings, and more particularly to FIG. 1 through FIG. 5B, where similar reference characters denote corresponding features consistently throughout the figures, there are shown preferred embodiments, and these embodiments are described in the context of the following exemplary system and/or method.

FIG. 1 illustrates an exemplary system to optimize cloud cost by analyzing pricing models, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

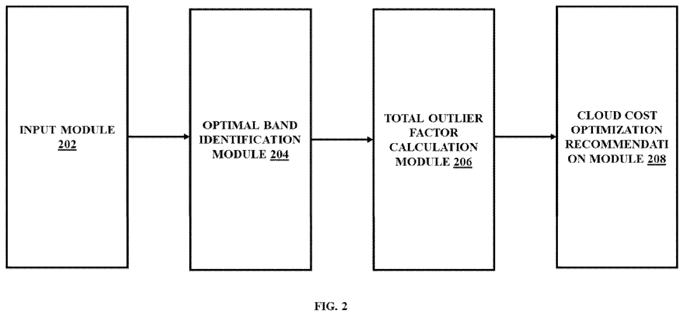

The plurality of modules 106 includes programs or coded instructions that supplement applications or functions performed by the system 100 to optimize cloud cost by analyzing pricing models. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 to optimize cloud cost by analyzing cloud resource utilization. In an embodiment, the modules 106 include an input module 202, an optimal band identification module 204, a total outlier factor calculation module 206 and a cloud cost optimization recommendation module 208. The modules are depicted in FIG. 2. These modules that are depicted in FIG. 2 are implemented as at least one of a logically self-contained part of a software program, a self-contained hardware component, and/or a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

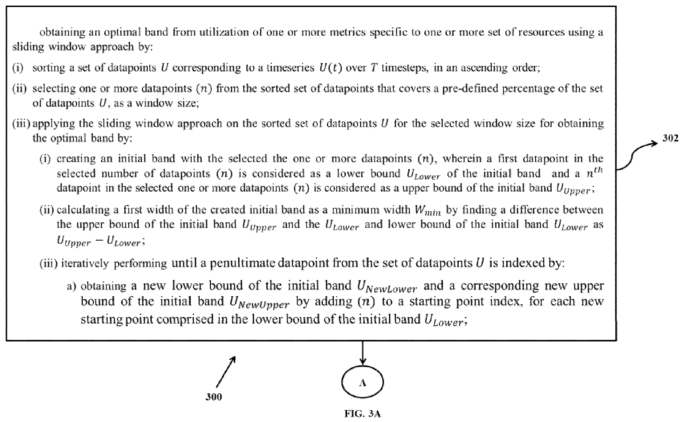

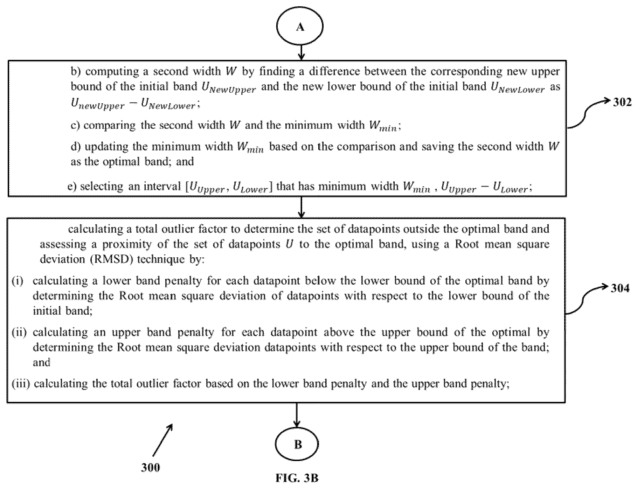

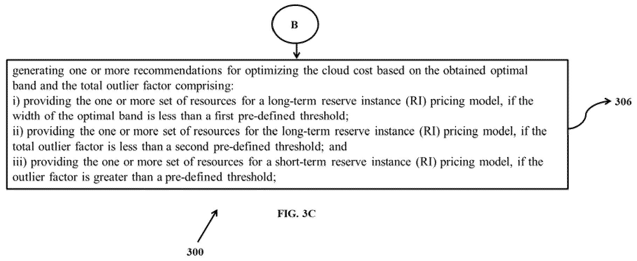

FIGS. 3A through 3C are flow diagrams illustrating a method to optimize cloud cost by analyzing pricing models using the systems 100 of FIGS. 1-2, according to some embodiments of the present disclosure. Steps of the method of FIGS. 3A through 3C shall be described in conjunction with the components of FIG. 2. At step 302 of the method 300, the optimal band identification module 204 executed via the one or more hardware processors 102 obtains an optimal band from utilization of one or more metrics specific to one or more set of resources (comprised in the input module 202) using a sliding window approach. The one or more set of resources are instances of one or more cloud services created within one or more resource groups. The one or more cloud services comprises one or more virtual machines and one or more storage accounts. The one or more metrics specific to the one or more set of resources comprises a Central Processing Unit and a memory.

The one or more cloud resources (one or more set of resources) are organized in a hierarchical structure. The hierarchy typically consists of multiple levels, each level serving a specific purpose in resource management. At the top level, there is usually an overarching entity, followed by intermediate levels that help in grouping and organizing resources effectively. Each level within the hierarchy plays a distinct role in resource allocation, billing, and management.

Management groups: Management groups enable centralized management of access, policy, and compliance across multiple cloud accounts. Conditions applied to a management group are inherited by all included accounts, ensuring consistent governance.

Subscriptions: Subscriptions associate user identities with the resources they create and impose limits on resource usage. The subscriptions help organizations or various entities manage costs and resource allocation by segmenting resources according to users, teams, and/or projects.

Resource groups: Resource groups are logical containers for deploying and managing cloud resources such as virtual machines and databases. The resource groups facilitate organized resource management, role-based access control, and policy enforcement.

Resources: Resources are instances of cloud services, such as virtual machines and storage accounts, created within resource groups. Effective resource management involves adhering to organizational policies and optimizing configurations for performance and cost.

Additionally, various domain attributes influence how resources are structured and managed, including application types, trust boundaries, environments (e.g., development, testing, production, and the like), data policies (For example: Data protection law in United States (US)) that imposes restrictions on data movement) related to customer data across regions, performance considerations, and other relevant factors (For example, performance varies by environment and production must be optimized, while development/testing can tolerate slower speeds for debugging). These domain attributes collectively determine the placement, configuration, and overall management of resources within the cloud environment. Each resource is uniquely identified by a resource identifier (ID) and resource type, defining its nature (e.g. computer, storage, networking). A meter name specifies the type of resource, while the meter sub-category indicates specific features including one or more Central Processing Unit (CPU) cores, a memory size, a storage type and a regional availability.

Location denotes the geographic region of the resource, impacting performance and compliance. Family series groups resources by performance capabilities. Pricing models such as Reserved Instance or On-Demand offer payment flexibility. It is crucial to consider attributes directly impacting spend, as they play a vital role in cost optimization efforts. Effective price refers to the actual price paid for utilizing a particular resource, factoring in any discounts, reservations, or pricing tiers applied. Quantity refers to the amount of resource consumed within a specific timeframe. Spend refers to the total cost incurred on cloud resource within a specific timeframe, calculated by multiplying the effective price by quantity consumed. Optimization opportunities in cloud spend manifest in different forms and hence require different approaches to derive such recommendations.

Cloud providers offer a variety of options to plan cloud budget. Different factors affect the cost of a resource such as location, subscription plan, type of usage, etc. This flexibility provides more power and control to the architects and operations teams. However, if these options are not used judiciously then it also comes with a side-effect of suboptimal spend. Suboptimal spend often manifests in the form of spend anomalies.

In the present disclosure, the optimal band from the utilization of one or more metrics specific to the one or more set of resources is obtained using the following steps. A set of datapoints $U$ corresponding to a timeseries $U(t)$ over $T$ timesteps is sorted in at least one order (e.g., in the present disclosure, the desired order is an ascending order). Further one or more datapoints ($n$) from the sorted set of datapoints are selected that covers $x$% of $y$ datapoints where $x$ may vary and in the present disclosure, value of $x$ is 80%. Further the sliding window approach is applied on the sorted set of datapoints $U$ for the selected window size for obtaining the optimal band using the following steps. An initial band is created with the selected the one or more datapoints ($n$), wherein a first datapoint in the selected number of datapoints ($n$) is considered as a lower bound $U_{Lower}$ of the initial band and a $n^{th}$ datapoint in the selected one or more datapoints ($n$) is considered as a upper bound of the initial band $U_{Upper}$. A first width of the created initial band is calculated as a minimum width $W_{min}$ by finding a difference between the upper bound of the initial band $U_{Upper}$ and the $U_{Lower}$ and lower bound of the initial band $U_{Lower}$ as $U_{Upper} - U_{Lower}$.

The following steps are iteratively performed until a penultimate datapoint from the set of datapoints is indexed. For example, if the window size is $K$ and number of data points $N$, the following steps are iteratively performed until you have processed all elements from index 0 to index $N - K$ times. A new lower bound of the initial band $U_{NewLower}$ is obtained by calculating a corresponding new upper bound of the initial band $U_{NewUpper}$ for each new starting point comprised in the $U_{Lower}$ by adding ($n$) to a starting point index. Further a second width $W$ is computed by finding a difference between the corresponding new upper bound of the initial band $U_{NewUpper}$ and the new lower bound of the initial band $U_{NewLower}$ as $U_{newUpper} - U_{NewLower}$. The second width $W$ and the minimum width $W_{min}$ are compared and the minimum width $W_{min}$ is updated based on the comparison and the second width $W$ is saved as the optimal band. Furthermore, an interval [$U_{Upper}$, $U_{Lower}$] that has minimum width $W_{min}$ , $U_{Upper} - U_{Lower}$ is selected.

A cloud user is expected to be aware of its resource requirements to select an appropriate pricing model based on its resources. The problem is defined formally as follows:

- Let $U = \{U(t_1), U(t_1), \ldots, U(T)\}$ be the set of datapoints corresponding to timeseries $U(t)$ over $T$ timesteps.

- Determine an optimal upper and lower band, $U_{Upper}$ and $U_{Lower}$ respectively, such that:

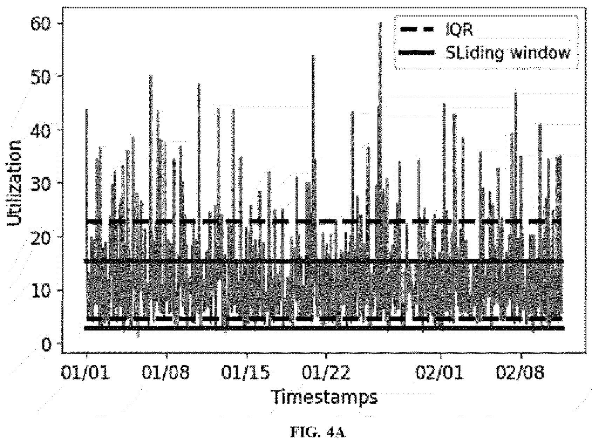

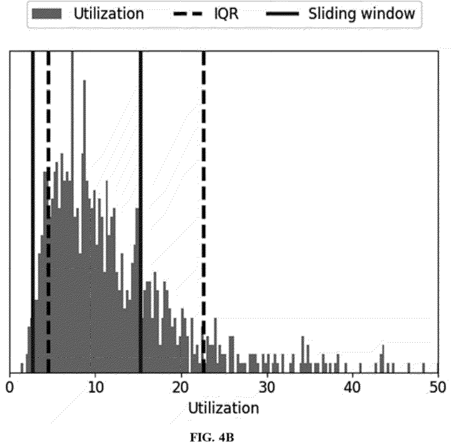

    Band $[U_{upper}, U_{Lower}]$ cover 80% of datapoints in $U(t)$
    The difference between the upper and lower band ($U_{Upper}$-$U_{Lower}$) is minimized.
    Interquartile Range (IQR) is a common statistical method used to capture the bands. However, it has significant limitations, particularly when dealing with skewed data, as illustrated in FIGS. 4A and 4B.

To overcome the above-mentioned problem, the present disclosure proposes a sliding window approach for timeseries data:

1. Sort the datapoints $U$ in ascending order.
2. Utilize sliding window to find interval $[U_{Upper}, U_{Lower}]$ that covers 80% of datapoints:

    a. Determine the number of datapoints (n) that covers 80% of datapoints. ($n = 0.8 * T$)
    b. Initialize a band with first $n$ datapoints. $U_{Lower} = U[1], U_{Upper} = U[n]$
    Initialize minimum width $W_{min} = U_{Upper} - U_{Lower}$
    c. For each possible value of $U_{Lower} = U[i]$ $for\ i \in [1, T - n + 1]$, find $U_{Upper} = U[n + i - 1]$ .
    d.

$$\text{Compute the width } W = U_{Upper} - U_{Lower}$$

    e. Update optimal band if $W < W_{min}$.

3. Select the interval $[U_{Upper}, U_{Lower}]$ that has minimum width $U_{Upper} - U_{Lower}$

At step 304 of the method 300, the total outlier factor calculation module 206 executed via the one or more hardware processors 102 calculates a total outlier factor to determine the set of datapoints $U$ outside the optimal band and assesses a proximity of the set of datapoints $U$ to the optimal band, using a Root mean square deviation (RMSD) technique by performing the following steps. A lower band penalty is calculated for each datapoint comprised in the set of datapoints $U$, below the lower bound of the optimal band by determining the RMSD of datapoints $RMSD_{lower}$ with respect to the lower bound of the initial band. Further an upper band penalty is calculated for each datapoint comprised in the set of datapoints $U$, above the upper bound of the optimal by determining the RMSD datapoints $RMSD_{upper}$ with respect to the upper bound of the band. Furthermore, the total outlier factor is calculated based on (or using) the lower band penalty and the upper band penalty.

At step 306 of the method 300, the cloud cost optimization recommendation module 208 executed via the one or more hardware processors 102 generates one or more recommendations for optimizing the cloud cost based on the obtained optimal band and the total outlier factor. The present disclosure optimizes the cloud cost by recommending the one or more set of resources that can be converted from the on-demand pricing model to the Reserved Instance (RI) pricing model by performing the following steps. The one or more set of resources are considered for a long-term reserve instance (RI) pricing model, if the width of the optimal band is less than a first pre-defined threshold. For example, if the width of the optimal band is less than or equal to 50 (<=50, herein value of the first pre-defined threshold is 50), then the one or more set of resources are considered for the long-term reserve instance (RI) pricing model.

Further the one or more set of resources are considered for the long-term reserve instance (RI) pricing model, if the total outlier factor is less than a second pre-defined threshold. For example, if the width of the optimal band is less than or equal to 10 to 20 (<=10 - 20, herein value of the second pre-defined threshold is 10 to 20), then the one or more set of resources are considered for the long-term reserve instance (RI) pricing model.

Furthermore, the one or more set of resources are considered for a short-term reserve instance (RI) pricing model, if the total outlier factor is greater than a third pre-defined threshold. For example, if the width of the optimal band is greater than 20 (>20, herein value of the third pre-defined threshold is 20), then the one or more set of resources are considered for the short-term reserve instance (RI) pricing model. Herein, the first pre-defined threshold, the second pre-defined threshold and the third pre-defined threshold are not constant and are defined by the user.

Once the potential candidates are identified for the Reserve instance (RI) pricing model, the system 100 prioritizes the Reserve instance (RI) pricing model recommendations based on the potential savings. The cost savings are computed by taking difference of spend forecast using current pricing model and forecasted spend using the Reserve instance (RI) pricing model.

The present disclosure identifies one or more underutilized resources based on the one or more recommendations generated for considering the one or more set of resources, which are eligible for Reserved Instance (RI). If the one or more underutilized resources are present/identified, the one or more set of resources are downgraded and then converted to Reserved Instance (RI) using the following steps.

(i) Find an average utilization of one or more metrics specific to the one or more set of resources (CPU and Memory).

(ii) If the average utilization of all the one or more metrics specific to the one or more set of resources is less than a predefined threshold for minimum utilization, then the resource is considered as underutilized or else it is considered as optimally utilized. The predefined threshold can be less than equal to 40 (<=40).

(iii) Downgrade the resource from the current size and convert from the On-demand pricing model to the Reserved Instance (RI) pricing model for better savings. And all optimal resources convert the On-demand pricing model to the Reserved instance (RI) pricing model using the same current size.

FIGS. 4A and 4B show a Central Processing Unit (CPU) utilization of a metric and resource utilization bands, according to some embodiments of the present disclosure.

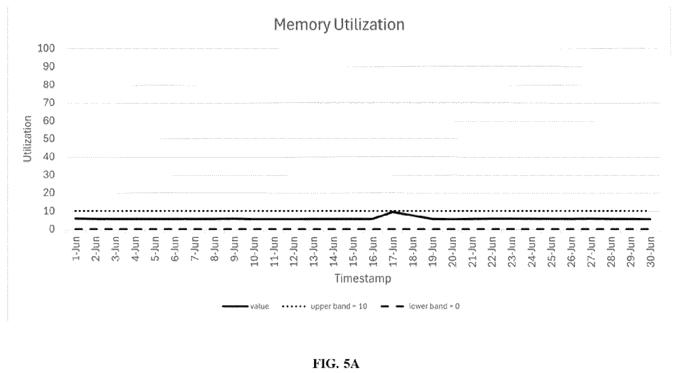

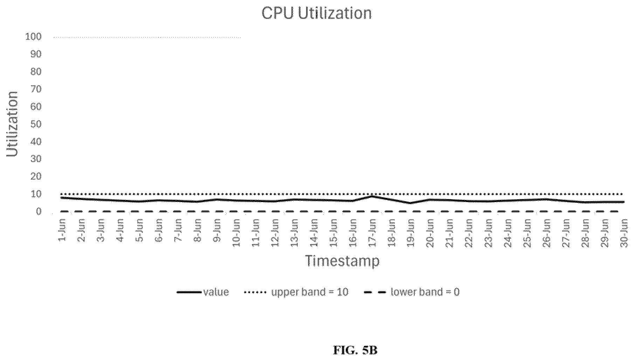

FIGS. 5A and 5B show that a Virtual Machine (VM) demonstrates a consistent utilization across a Central Processing Unit (CPU) and a memory, making it an ideal case for a Reserve instance (RI), according to some embodiments of the present disclosure.

In the present disclosure, the metric utilization of 2,820 resources has been analyzed to look for resources with consistent utilization that can be recommended for RI pricing model. An example of one such VM is presented in FIG. 5 which shows that the VM demonstrates a consistent utilization across both CPU and memory, making it an ideal case for RI. Consider a 3-year tenure, migrating to RI model costs INR 88,733 compared to the on-demand model that costs INR 2,25,917, resulting in a 3-year saving of INR 1,37,183. Out of 2,820 resources, the system 100 identified 50 resources as candidates for reserved instances. Furthermore, the system 100 found that 12 out of the 50 resources were underutilized and needed to be downgraded, resulting in an annual saving of INR 49,97,251.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiment thus provides the system and method to optimize cloud cost by analyzing pricing models. The present disclosure optimizes the cloud cost by recommending resources that can be converted from on-demand resources to Reserved Instance (RI) resources, which saves cost by 40-50%. Further the present disclosure finds the optimal band of the resource metrices, to check whether the resources are optimal or not. The one or more recommendations to convert on-demand pricing model to Reserved instances (RI) pricing model for the long-term is provided, if the optimal band is in the predefined threshold. Further, if the total outlier factor is within the predefined threshold a recommendation to convert on-demand to Reserved instances for the short-term/the long-term is provided. Furthermore, the conversion of the pricing model optimizes the cloud cost.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), comprising:
   obtaining (302), via one or more hardware processors, an optimal band from utilization of one or more metrics specific to one or more set of resources using a sliding window approach by:

   (i) sorting a set of datapoints $U$ corresponding to a timeseries $U(t)$ over $T$ timesteps, in an ascending order;
   (ii) selecting one or more datapoints ($n$) from the sorted set of datapoints that covers a pre-defined percentage of the set of datapoints $U$, as a window size; and
   (iii) applying the sliding window approach on the sorted set of datapoints $U$ for the selected window size for obtaining the optimal band by:

   (i) creating an initial band with the selected the one or more datapoints ($n$), wherein a first datapoint in the selected the one or more datapoints ($n$) is considered as a lower bound of the initial band $U_{Lower}$ and a $n^{th}$ datapoint in the selected one or more datapoints ($n$) is considered as a upper bound of the initial band $U_{Upper}$;
   (ii) calculating a first width of the created initial band as a minimum width $W_{min}$ by finding a difference between the upper bound of the initial band $U_{Upper}$ and the lower bound of the initial band $U_{Lower}$ as $U_{Upper}$ - $U_{Lower}$; and
   (iii) iteratively performing until a penultimate datapoint from the set of datapoints $U$ is indexed by:

   a) obtaining a new lower bound of the initial band $U_{NewLower}$ and a corresponding new upper bound of the initial band $U_{NewUpper}$ by adding ($n$) to a starting point index, for each new starting point comprised in the lower bound of the initial band $U_{Lower}$;
   b) computing a second width $W$ by finding a difference between the associated new upper bound of the initial band $U_{NewUpper}$ and the new lower bound of the initial band $U_{NewLower}$ as $U_{NewUpper}$ - $U_{NewLower}$;
   c) comparing the second width $W$ and the minimum width $W_{min}$;
   d) updating the minimum width $W_{min}$ based on the comparison and saving the second width $W$ as the optimal band; and
   e) selecting an interval [$U_{Upper}$, $U_{Lower}$] that has minimum width $W_{min}$ , $U_{Upper}$ - $U_{Lower}$;

   calculating (304), via the one or more hardware processors, a total outlier factor to determine the set of datapoints $U$ outside the optimal band and assessing a proximity of the set of datapoints $U$ to the optimal band, using a Root mean square deviation (RMSD) technique by:

   (i) calculating a lower band penalty for each datapoint comprised in the set of datapoints $U$ below the lower bound of the optimal band by determining a Root mean square deviation of the set of datapoints $U$ with respect to the lower bound of the initial band;
   (ii) calculating an upper band penalty for each datapoint set of datapoints $U$ above the upper bound of the optimal by determining the Root mean square deviation of the set of datapoints $U$ with respect to the upper bound of the band; and

(iii) calculating the total outlier factor based on the lower band penalty and the upper band penalty; and

generating (306), via the one or more hardware processors, one or more recommendations for optimizing a cloud cost based on the obtained optimal band and the total outlier factor comprising:

(i) providing the one or more set of resources for a long-term reserve instance (RI) pricing model, if the width of the optimal band is less than a first pre-defined threshold;
(ii) providing the one or more set of resources for the long-term reserve instance (RI) pricing model, if the total outlier factor is less than a second pre-defined threshold; and
(iii) providing the one or more set of resources for a short-term reserve instance (RI) pricing model, if the total outlier factor is greater than a third pre-defined threshold.

2. The processor implemented method as claimed in claim 1, wherein the one or more set of resources are instances of one or more cloud services created within one or more resource groups.

3. The processor implemented method (300) as claimed in claim 1, wherein the one or more resource groups are one or more logical containers for deploying and managing the one or more set of resources, and wherein the one or more resource groups facilitate an organized resource management, a role-based access control, and a policy enforcement.

4. The processor implemented method (300) as claimed in claim 1, wherein the one or more cloud services comprises one or more virtual machines and one or more storage accounts.

5. The processor implemented method (300) as claimed in claim 1, wherein the one or more metrics specific to the one or more set of resources comprises a Central Processing Unit and a memory.

6. The processor implemented method (300) as claimed in claim 1, wherein one or more cost savings are computed for each of the one or more recommendations.

7. A system (100), comprising:

a memory (104) storing instructions;
one or more communication interfaces (112); and
one or more hardware processors (102) coupled to the memory (104) via the one or more communication interfaces (112), wherein the one or more hardware processors (102) are configured by the instructions to:
obtain an optimal band from utilization of one or more metrics specific to one or more set of resources using a sliding window approach by:

(i) sorting a set of datapoints $U$ corresponding to a timeseries $U(t)$ over $T$ timesteps, in an ascending order;
(ii) selecting one or more datapoints ($n$) from the sorted set of datapoints that covers a pre-defined percentage of the set of datapoints $U$, as a window size; and
(iii) applying the sliding window approach on the sorted set of datapoints $U$ for the selected window size for obtaining the optimal band by:

(i) creating an initial band with the selected the one or more datapoints ($n$), wherein a first datapoint in the selected the one or more datapoints ($n$) is considered as a lower bound of the initial band $U_{Lower}$ and a $n^{th}$ datapoint in the selected one or more datapoints ($n$) is considered as a upper bound of the initial band $U_{Upper}$;
(ii) calculating a first width of the created initial band as a minimum width $W_{min}$ by finding a difference between the upper bound of the initial band $U_{Upper}$ and the lower bound of the initial band $U_{Lower}$ as $U_{Upper} - U_{Lower}$; and
(iii) iteratively performing until a penultimate datapoint from the set of datapoints $U$ is indexed by:

a) obtaining a new lower bound of the initial band $U_{NewLower}$ and a corresponding new upper bound of the initial band $U_{NewUpper}$ by adding ($n$) to a starting point index, for each new starting point comprised in the lower bound of the initial band $U_{Lower}$;
b) computing a second width $W$ by finding a difference between the associated new upper bound of the initial band $U_{NewUpper}$ and the new lower bound of the initial band $U_{NewLower}$ as $U_{NewUpper}$ -

$U_{NewLower}$;

c) comparing the second width $W$ and the minimum width $W_{min}$;

d) updating the minimum width $W_{min}$ based on the comparison and saving the second width $W$ as the optimal band; and

e) selecting an interval $[U_{Upper}, U_{Lower}]$ that has minimum width $W_{min}$, $U_{Upper} - U_{Lower}$;

calculate a total outlier factor to determine the set of datapoints $U$ outside the optimal band and assessing a proximity of the set of datapoints $U$ to the optimal band, using a Root mean square deviation (RMSD) technique by:

(i) calculating a lower band penalty for each datapoint comprised in the set of datapoints $U$ below the lower bound of the optimal band by determining a Root mean square deviation of the set of datapoints $U$ with respect to the lower bound of the initial band;

(ii) calculating an upper band penalty for each datapoint set of datapoints $U$ above the upper bound of the optimal by determining the Root mean square deviation of the set of datapoints $U$ with respect to the upper bound of the band; and

(iii) calculating the total outlier factor based on the lower band penalty and the upper band penalty; and

generate one or more recommendations for optimizing a cloud cost based on the obtained optimal band and the total outlier factor comprising:

(i) providing the one or more set of resources for a long-term reserve instance (RI) pricing model, if the width of the optimal band is less than a first pre-defined threshold;

(ii) providing the one or more set of resources for the long-term reserve instance (RI) pricing model, if the total outlier factor is less than a second pre-defined threshold; and

(iii) providing the one or more set of resources for a short-term reserve instance (RI) pricing model, if the total outlier factor is greater than a third pre-defined threshold.

8. The system (100) as claimed in claim 7, wherein the one or more set of resources are instances of one or more cloud services created within one or more resource groups.

9. The system (100) as claimed in claim 7, wherein the one or more resource groups are one or more logical containers for deploying and managing the one or more set of resources, and wherein the one or more resource groups facilitate an organized resource management, a role-based access control, and a policy enforcement.

10. The system (100) as claimed in claim 7, wherein the one or more cloud services comprises one or more virtual machines and one or more storage accounts.

11. The system (100) as claimed in claim 7, wherein the one or more metrics specific to the one or more set of resources comprises a Central Processing Unit and a memory.

12. The system (100) as claimed in claim 7, wherein one or more cost savings is computed for each of the one or more recommendations and recommending the one or more cost savings with a most savings.

13. One or more non-transitory machine-readable information storage mediums comprising one or more instructions which when executed by one or more hardware processors cause:

obtaining an optimal band from utilization of one or more metrics specific to one or more set of resources using a sliding window approach by:

(i) sorting a set of datapoints $U$ corresponding to a timeseries $U(t)$ over $T$ timesteps, in an ascending order;

(ii) selecting one or more datapoints $(n)$ from the sorted set of datapoints that covers a pre-defined percentage of the set of datapoints $U$, as a window size; and

(iii) applying the sliding window approach on the sorted set of datapoints $U$ for the selected window size for obtaining the optimal band by:

(i) creating an initial band with the selected the one or more datapoints $(n)$, wherein a first datapoint in the selected the one or more datapoints $(n)$ is considered as a lower bound of the initial band $U_{Lower}$ and a $n^{th}$ datapoint in the selected one or more datapoints $(n)$ is considered as a upper bound of the initial band $U_{Upper}$;

(ii) calculating a first width of the created initial band as a minimum width $W_{min}$ by finding a difference between the upper bound of the initial band $U_{Upper}$ and the lower bound of the initial band $U_{Lower}$ as $U_{Upper} - U_{Lower}$; and

(iii) iteratively performing until a penultimate datapoint from the set of datapoints $U$ is indexed by:

a) obtaining a new lower bound of the initial band $U_{NewLower}$ and a corresponding new upper bound of the initial band $U_{NewUpper}$ by adding ($n$) to a starting point index, for each new starting point comprised in the lower bound of the initial band $U_{Lower}$;

b) computing a second width $W$ by finding a difference between the associated new upper bound of the initial band $U_{NewUpper}$ and the new lower bound of the initial band $U_{NewLower}$ as $U_{NewUpper} - U_{NewLower}$;

c) comparing the second width $W$ and the minimum width $W_{min}$;

d) updating the minimum width $W_{min}$ based on the comparison and saving the second width $W$ as the optimal band; and

e) selecting an interval [$U_{Upper}$, $U_{Lower}$] that has minimum width $W_{min}$, $U_{Upper} - U_{Lower}$;

calculating a total outlier factor to determine the set of datapoints $U$ outside the optimal band and assessing a proximity of the set of datapoints $U$ to the optimal band, using a Root mean square deviation (RMSD) technique by:

(i) calculating a lower band penalty for each datapoint comprised in the set of datapoints $U$ below the lower bound of the optimal band by determining a Root mean square deviation of the set of datapoints $U$ with respect to the lower bound of the initial band;

(ii) calculating an upper band penalty for each datapoint set of datapoints $U$ above the upper bound of the optimal by determining the Root mean square deviation of the set of datapoints $U$ with respect to the upper bound of the band; and

(iii) calculating the total outlier factor based on the lower band penalty and the upper band penalty; and

generating one or more recommendations for optimizing a cloud cost based on the obtained optimal band and the total outlier factor comprising:

(i) providing the one or more set of resources for a long-term reserve instance (RI) pricing model, if the width of the optimal band is less than a first pre-defined threshold;

(ii) providing the one or more set of resources for the long-term reserve instance (RI) pricing model, if the total outlier factor is less than a second pre-defined threshold; and

(iii) providing the one or more set of resources for a short-term reserve instance (RI) pricing model, if the total outlier factor is greater than a third pre-defined threshold.

14. The one or more non-transitory machine readable information storage mediums as claimed in claim 13, wherein the one or more set of resources are instances of one or more cloud services created within one or more resource groups.

15. The one or more non-transitory machine readable information storage mediums as claimed in claim 13, wherein the one or more resource groups are one or more logical containers for deploying and managing the one or more set of resources, and wherein the one or more resource groups facilitate an organized resource management, a role-based access control, and a policy enforcement.

FIG. 1

INPUT MODULE
202

→

OPTIMAL BAND
IDENTIFICATION
MODULE 204

→

TOTAL OUTLIER
FACTOR
CALCULATION
MODULE 206

→

CLOUD COST
OPTIMIZATION
RECOMMENDATI
ON MODULE 208

FIG. 2

obtaining an optimal band from utilization of one or more metrics specific to one or more set of resources using a sliding window approach by:

(i) sorting a set of datapoints $U$ corresponding to a timeseries $U(t)$ over $T$ timesteps, in an ascending order;

(ii) selecting one or more datapoints $(n)$ from the sorted set of datapoints that covers a pre-defined percentage of the set of datapoints $U$, as a window size;

(iii) applying the sliding window approach on the sorted set of datapoints $U$ for the selected window size for obtaining the optimal band by:

    (i) creating an initial band with the selected the one or more datapoints $(n)$, wherein a first datapoint in the selected number of datapoints $(n)$ is considered as a lower bound $U_{Lower}$ of the initial band and a $n^{th}$ datapoint in the selected one or more datapoints $(n)$ is considered as a upper bound of the initial band $U_{Upper}$;

    (ii) calculating a first width of the created initial band as a minimum width $W_{min}$ by finding a difference between the upper bound of the initial band $U_{Upper}$ and the $U_{Lower}$ and lower bound of the initial band $U_{Lower}$ as $U_{Upper} - U_{Lower}$;

    (iii) iteratively performing until a penultimate datapoint from the set of datapoints $U$ is indexed by:

        a) obtaining a new lower bound of the initial band $U_{NewLower}$ and a corresponding new upper bound of the initial band $U_{NewUpper}$ by adding $(n)$ to a starting point index, for each new starting point comprised in the lower bound of the initial band $U_{Lower}$;

302

300

A

FIG. 3A

A

b) computing a second width $W$ by finding a difference between the corresponding new upper bound of the initial band $U_{NewUpper}$ and the new lower bound of the initial band $U_{NewLower}$ as $U_{newUpper} - U_{NewLower}$;

c) comparing the second width $W$ and the minimum width $W_{min}$;

d) updating the minimum width $W_{min}$ based on the comparison and saving the second width $W$ as the optimal band; and

e) selecting an interval $[U_{Upper}, U_{Lower}]$ that has minimum width $W_{min}$, $U_{Upper} - U_{Lower}$;

→ 302

calculating a total outlier factor to determine the set of datapoints outside the optimal band and assessing a proximity of the set of datapoints $U$ to the optimal band, using a Root mean square deviation (RMSD) technique by:

(i) calculating a lower band penalty for each datapoint below the lower bound of the optimal band by determining the Root mean square deviation of datapoints with respect to the lower bound of the initial band;

(ii) calculating an upper band penalty for each datapoint above the upper bound of the optimal by determining the Root mean square deviation datapoints with respect to the upper bound of the band; and

(iii) calculating the total outlier factor based on the lower band penalty and the upper band penalty;

→ 304

B

300

**FIG. 3B**

B

generating one or more recommendations for optimizing the cloud cost based on the obtained optimal band and the total outlier factor comprising:

i) providing the one or more set of resources for a long-term reserve instance (RI) pricing model, if the width of the optimal band is less than a first pre-defined threshold;

ii) providing the one or more set of resources for the long-term reserve instance (RI) pricing model, if the total outlier factor is less than a second pre-defined threshold; and

iii) providing the one or more set of resources for a short-term reserve instance (RI) pricing model, if the outlier factor is greater than a pre-defined threshold;

→ 306

FIG. 3C

300

FIG. 4A

FIG. 4B

**Memory Utilization**

FIG. 5A

CPU Utilization

FIG. 5B

Europäisches
Patentamt
European
Patent Office
Office européen
des brevets

# EUROPEAN SEARCH REPORT

**Application Number**

EP 25 18 4368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | BHOOKYA UDAY CHANDRA ET AL: "Addressing Spend Leakage and Optimization of Cloud Costs", 2024 IEEE INTERNATIONAL CONFERENCE ON BIG DATA (BIGDATA), IEEE, 15 December 2024 (2024-12-15), pages 2288-2293, XP034801330, DOI: 10.1109/BIGDATA62323.2024.10825120 [retrieved on 2025-01-16] * the whole document * | 1-15 | INV. G06Q30/0201 G06Q30/0283 |
| X | US 2016/094410 A1 (ANWAR ALI [US] ET AL) 31 March 2016 (2016-03-31) * abstract; claims 1-20; figures 1-12 * * paragraphs [0008], [0022] - [0107] * | 1-15 | |
| X | US 2016/034835 A1 (LEVI EFRAT EGOZI [IL] ET AL) 4 February 2016 (2016-02-04) * abstract; claims 1-15; figures 1-5 * * paragraphs [0008] - [0053] * | 1-15 | |
| X | US 2016/191343 A1 (DONG JING [US] ET AL) 30 June 2016 (2016-06-30) * abstract; claims 1-15; figures 1-3 * * paragraphs [0006] - [0063] * | 1-15 | **TECHNICAL FIELDS SEARCHED (IPC)** G06Q |
| A | US 2023/385123 A1 (PAPPURU PRASAD BABU [IN] ET AL) 30 November 2023 (2023-11-30) * abstract; claims 1-10; figures 1-3b * * paragraphs [0005] - [0009], [0016] - [0048] * | 1-15 | |

The present search report has been drawn up for all claims

| Place of search | Date of completion of the search | Examiner |
|---|---|---|
| The Hague | 24 October 2025 | Streit, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 4368

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | | Publication date |
|---|---|---|---|---|
| US 2016094410 A1 | 31-03-2016 | NONE | | |
| US 2016034835 A1 | 04-02-2016 | NONE | | |
| US 2016191343 A1 | 30-06-2016 | CN | 105493066 A | 13-04-2016 |
| | | EP | 3039560 A1 | 06-07-2016 |
| | | US | 2016191343 A1 | 30-06-2016 |
| | | WO | 2015030828 A1 | 05-03-2015 |
| US 2023385123 A1 | 30-11-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421066667